# EUROPEAN PATENT APPLICATION

(11) **EP 4 779 900 A1**
(43) Date of publication of application: **22.07.2026**
(21) Application number: 26150030.0
(22) Date of filing: 02.01.2026
(51) Int. Cl.: H04B 7/185, H01Q 21/06

(54) **SYSTEM AND METHOD FOR MULTI-CONSTELLATION SATELLITE COMMUNICATION TERMINAL ANTENNA**

(30) Priority: 17.01.2025 IN 202511003943; 09.10.2025 US 202519353876
(71) Applicant: Honeywell International Inc., Charlotte, NC 28202 (US)
(72) Inventor: CHIVUKULA, Rajesh, Charlotte, 28202 (US); MUIRHEAD, Dave Stuart, Charlotte, 28202 (US)
(74) Representative: Haseltine Lake Kempner LLP

(57) **Abstract**

Systems, apparatuses, and methods relate generally to multi-constellation satellite communication terminal antennas, particularly to antenna arrays for vehicles. Such antenna arrays may be configured to support multi-band, multi-constellation operations in one terminal. For example, an antenna array may comprise a receive antenna and a transmit antenna, where both antennas are configured to communicate via a first frequency band and a second frequency band. Example embodiments provide for antenna arrays configured to support interelement spacing, interlaced elements, transmit/receive isolation, and/or simultaneous transmission and reception operations.

## Description

### CROSS-REFERENCE TO RELATED APPLICATIONS

This application claims priority to and the benefit of foreign Indian Provisional Patent Application Serial No. 202511003943, filed on January 17, 2025, with the Government of India Patent Office and entitled "System and Method for Multi-Constellation Satellite Communication Terminal Antenna," each of which is incorporated herein by reference in its entirety.

### TECHNOLOGICAL FIELD

Example embodiments of the present disclosure relate generally to antennas, particularly to antennas for multi-constellation satellite communications from an Earth based terminal.

### BACKGROUND

Antennas are used to communicate with satellites that orbit the Earth. Multiple satellites may be arranged in a constellations that operate by transmitting and receiving communications in a frequency band. Examples of types of orbits of satellite constellations include geosynchronous equatorial orbit (GEO) constellations, low Earth orbit (LEO) constellations, middle Earth orbit (MEO) constellations, and high Earth orbit (HEO) constellations. Conventionally, only single frequency band terminal antennas are available to communicate with satellites.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY

Various embodiments described herein relate to systems, apparatuses, and methods for multi-constellation satellite communication terminal antennas.

In accordance with some embodiments of the present disclosure, an example system is provided. The comprising: an antenna array comprising a first antenna and a second antenna; the first antenna is a receive antenna with a first plurality of receive antenna elements configured to receive at a first frequency band and a second plurality of receive antenna elements configured to receive at a second frequency band; the second antenna is a transmit antenna with a first plurality of transmit antenna elements configured to transmit at the first frequency band and a second plurality of transmit antenna elements configured to transmit at the second frequency band; at least one processor and at least one memory comprising instructions that, when executed by the at least one processor, cause the antenna array to: receive, with the first plurality of receive antenna elements of the first antenna, one or more communication receptions from a first satellite at the first frequency band; transmit, with the first plurality of transmit antenna elements of the second antenna, one or more communication transmissions to the first satellite at the first frequency band; scan, with the second plurality of receive antenna elements of the first antenna, for a second satellite at second frequency band; and transmit, with the second plurality of transmit antenna elements of the second antenna, one or more communication transmissions to the second satellite at the second frequency band.

In some embodiments, the first frequency band is a Ku frequency band.

In some embodiments, the Ku frequency band is comprised of a receive Ku frequency band from 10.7 GHz to 12.7 GHz and a transmit Ku frequency band from 14.0 GHz to 14.5 GHz; the one or more communication receptions from the first satellite are in the receive Ku band; and the one or more communication transmissions to the first satellite are in the transmit Ku band.

In some embodiments, the second frequency band is a Ka frequency band.

In some embodiments, the Ka frequency band is comprised of a receive Ka frequency band from 17.7 GHz to 21.2 GHz and a transmit Ka frequency band from 27.5 GHz to 31.0 GHz; the scan for the second satellite is in the receive Ka frequency band; and the one or more communication transmissions to the second satellite are in the transmit Ka band.

In some embodiments, the vehicle is at least one of an aircraft, an unmanned aerial vehicle (UAV), or an automobile.

In some embodiments, the first satellite is part of a low Earth orbit constellation and the second satellite is part of a geosynchronous equatorial orbit constellation.

In accordance with some embodiments of the present disclosure, an example method is provided. The method comprising: providing an antenna array comprising a first antenna and a second antenna, the first antenna is a receive antenna with a first plurality of receive antenna elements configured to receive at a first frequency band and a second plurality of receive antenna elements configured to receive at a second frequency band, and the second antenna is a transmit antenna with a first plurality of transmit antenna elements configured to transmit at the first frequency band and a second plurality of transmit antenna elements configured to transmit at the second frequency band; receiving, with the first plurality of receive antenna elements of the first antenna, one or more communication receptions from a first satellite at the first frequency band; transmitting, with the first plurality of transmit antenna elements of the second antenna, one or more communication transmissions to the first satellite at the first frequency band; scanning, with the second plurality of receive antenna elements of the first antenna, for a second satellite at second frequency band; and transmitting, with the second plurality of transmit antenna elements of the second antenna, one or more communication transmissions to the second satellite at the second frequency band.

In some embodiments, the first frequency band is a Ku frequency band.

In some embodiments, the Ku frequency band is comprised of a receive Ku frequency band from 10.7 GHz to 12.7 GHz and a transmit Ku frequency band from 14.0 GHz to 14.5 GHz; the one or more communication receptions from the first satellite are in the receive Ku band; and the one or more communication transmissions to the first satellite are in the transmit Ku band.

In some embodiments, the second frequency band is a Ka frequency band.

In some embodiments, the Ka frequency band is comprised of a receive Ka frequency band from 17.7 GHz to 21.2 GHz and a transmit Ka frequency band from 27.5 GHz to 31.0 GHz; scanning for the second satellite is in the receive Ka frequency band; and the one or more communication transmissions to the second satellite are in the transmit Ka band.

In some embodiments, the vehicle is at least one of an aircraft, an unmanned aerial vehicle, or an automobile.

In some embodiments, the first satellite is part of a low Earth orbit constellation and the second satellite is part of a geosynchronous equatorial orbit constellation.

In accordance with some embodiments of the present disclosure, an example computer program product is provided. The computer program product comprising at least one non-transitory computer-readable storage medium having computer program code stored thereon that, in execution with at least one processor, configures the computer program product to: receive, with a first plurality of receive antenna elements of a first antenna, one or more communication receptions from a first satellite at a first frequency band: an antenna array comprises the first antenna and a second antenna; the first antenna is a receive antenna with the first plurality of receive antenna elements configured to receive at a first frequency band and a second plurality of receive antenna elements configured to receive at a second frequency band; and the second antenna is a transmit antenna with a first plurality of transmit antenna elements configured to transmit at the first frequency band and a second plurality of transmit antenna elements configured to transmit at the second frequency band; transmit, with the first plurality of transmit antenna elements of the second antenna, one or more communication transmissions to the first satellite at the first frequency band; scan, with the second plurality of receive antenna elements of the first antenna, for a second satellite at second frequency band; and transmit, with the second plurality of transmit antenna elements of the second antenna, one or more communication transmissions to the second satellite at the second frequency band.

In some embodiments, the first frequency band is a Ku frequency band.

In some embodiments, the Ku frequency band is comprised of a receive Ku frequency band from 10.7 GHz to 12.7 GHz and a transmit Ku frequency band from 14.0 GHz to 14.5 GHz; the one or more communication receptions from the first satellite are in the receive Ku band; and the one or more communication transmissions to the first satellite are in the transmit Ku band.

In some embodiments, the second frequency band is a Ka frequency band.

In some embodiments, the Ka frequency band is comprised of a receive Ka frequency band from 17.7 GHz to 21.2 GHz and a transmit Ka frequency band from 27.5 GHz to 31.0 GHz; the scan for the second satellite is in the receive Ka frequency band; and the one or more communication transmissions to the second satellite are in the transmit Ka band.

In some embodiments, the vehicle is at least one of an aircraft, an unmanned aerial vehicle, or an automobile.

In some embodiments, the at least one processor and at least one memory further comprise instructions that, when executed by the at least one processor, cause the antenna array to: scan, with the second plurality of receive antenna elements of the first antenna, for a second satellite at second frequency band simultaneously when receiving one or more communication receptions with the first plurality of receive antenna elements of the first antenna.

In some embodiments, to receive, with the first plurality of receive antenna elements of the first antenna, one or more communication receptions from a first satellite at the first frequency band including receiving two Ka band beams from a Ka low Earth orbit satellite.

In some embodiments, to receive, with the first plurality of receive antenna elements of the first antenna, one or more communication receptions from a first satellite at the first frequency band including receiving two Ku band beams from a Ku low Earth orbit satellite.

In some embodiments, to receive one or more communication receptions from the first satellite at the first frequency band is at a Ka frequency band; to scan for the second satellite at second frequency band is at a Ku frequency band; and the second satellite is part of a low Earth orbit constellation, geosynchronous equatorial orbit constellation, or middle earth orbit constellation.

In some embodiments, to receive one or more communication receptions from the first satellite at the first frequency band is at a Ku frequency band; to scan for the second satellite at second frequency band is at a Ka frequency band; and the second satellite is part of a low Earth orbit constellation, geosynchronous equatorial orbit constellation, or middle earth orbit constellation.

The above summary is provided merely for purposes of summarizing some example embodiments to provide a basic understanding of some aspects of the disclosure. Accordingly, it will be appreciated that the above-described embodiments are merely examples and should not be construed to narrow the scope or spirit of the disclosure in any way. It will also be appreciated that the scope of the disclosure encompasses many potential embodiments in addition to those here summarized, some of which will be further described below.

### BRIEF DESCRIPTION OF THE DRAWINGS

Reference will now be made to the accompanying drawings, which are not necessarily drawn to scale, and wherein:
FIG. 1 illustrates an exemplary system for multi-constellation satellite communication in accordance with one or more embodiments of the present disclosure;
FIG. 2 illustrates exemplary antennas in accordance with one or more embodiments of the present disclosure;
FIG. 3 illustrates a flowchart of operations in accordance with one or more embodiments of the present disclosure; and
FIG. 4 illustrates an exemplary device in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that specific component or feature is not required to be included or to have the characteristic. Such a component or feature may be optionally included in some embodiments, or it may be excluded.

### Overview

Various embodiments described herein relate to methods, apparatuses, and systems for antennas, particularly to antennas for multi-constellation satellite communications. Various embodiments may include antennas configured for multi-constellation satellite communications from Earth-based terminals. Various embodiments of antennas may include elements with interelement spacing. Various embodiments may include antennas configured for multi-constellation satellite communications using multiple different frequencies or frequency bands of operation. Various embodiments may utilize transmit and receive isolation and/or simultaneous transmit and receive operations, for example, at various frequency bands (e.g., Ku bands, Ka bands, and/or the like). The antennas may be terminal antennas in an antenna array that provide for multi-band, multi-constellation operations. Such satellite constellations may allow for communication from a vehicle or vehicle equipment to external devices through the satellites. Various embodiments provide for interlacing of antenna elements in a multi-band system that may receive (or transmit) with one or more frequencies or frequency bands per antenna.

The antenna arrays described herein communicate with satellites of satellite constellations. Satellite constellations may include geosynchronous equatorial orbit (GEO) satellites in a constellation with each satellite being in a stationary orbit such that the satellite is stationary in relation to the rotation of the Earth (e.g., geostationary satellites). As such, a GEO satellite is considered stationary and in a known location. Satellites in other constellations, such as in an LEO constellation, may not be in a stationary location. Similarly, satellites in an MEO constellation and/or an HEO constellation, which differ from each other and from LEO constellations via one or more characteristics (e.g., altitude), may not be in a stationary location.

Before communicating with a satellite(s), an antenna array may scan for the location of one or more satellites. As a vehicle with an antenna array moves, the antenna array may scan for communications from these satellites. Once one or more satellites are located, then the antenna array may establish communication with the one or more satellites. After communication is established, transmit communications and receive communications with the satellite may allow for high data rate communications. In various embodiments, high data communication rates may be up to 100 megabits per second or more. In various embodiments, the communication rates may be capped at different threshold(s).

The antenna array allows for seamlessly switching between satellite constellations (e.g., from a GEO satellite to an LEO satellite and/or vice versa) to provide seamless communications to or from a vehicle and/or the vehicle's systems. In various embodiments, this may be a make before break (MBB) system that establishes a new communication link with a new satellite before breaking a prior communication link to a different satellite. While one or more embodiments described herein may include an embodiment with an antenna array of a first antenna communicating with one or more satellites of a first constellation and a second antenna communicating with one or more satellites of a second constellation, it will be appreciated that first constellation may be one or more satellites in GEO, LEO, MEO, and/or HEO and that the second constellation may be one or more satellites in GEO, LEO, MEO, and/or HEO. In other words, various embodiments may include constellations of different or of the same types of orbits.

A number of radiation beams used for a given communication link may be dependent or vary based on the network or satellite(s) being communicated with. In various embodiments, a radiation beam may refer to a transmission or communication from an antenna to a satellite with the transmission or communication radiating in a transmit from the antenna that is received by the satellite. In various embodiments, radiation beam may refer to a transmission or communication from a satellite to an antenna with the transmission or communication radiating in a transmit from the satellite that is received by the antenna. Systems with the antenna array of the present disclosure provide for high power antenna radiation beams and patterns configured to support receive and transmit communications. In various embodiments, the multiple radiation beams used do not interfere with each other because each may use different frequency bands and/or different portions of a frequency band. During transmission from a transmit antenna, only one transmit frequency or frequency band is used at a time (e.g., a first transmission at a first frequency band of a Ka is transmitted at a first time and a second transmission at a second frequency band of a Ku band is transmitted at a second time after the first transmission). By transmitting at different frequency bands at different times, it may be guaranteed that there is no interference during transmitting from an antenna.

For example, a first frequency band of a multi-frequency antenna of a terminal antenna array may be used for transmitting and receiving on one frequency band. The first frequency band may be a Ku band. A second frequency band of the multi-frequency antenna may be a Ka band. Such a configuration using multiple frequencies may allow for communicating with multiple satellites. Communicating (e.g., simultaneously, contemporaneously, and/or the like) with a plurality of satellites may include switching between the different satellites using different frequency bands, which may provide redundant communications and protect against potential outages. Additionally, the terminal antenna array described herein does not need to delay between receive and transmit communications due to the multi-frequency configuration.

In various embodiments, while a first antenna using a first frequency band (e.g., Ku) band is communicating with a first satellite, the first antenna operating at a second frequency band (e.g., Ka band) may also operate and be scanning for network availability of a second satellite. These operations may occur simultaneously. This may allow for switching over to the satellite(s) newly identified by the scanning if, for example, the first satellite is lost and/or communication is interrupted.

Embodiments of the present disclosure include one or more multi-band antenna arrays of a first terminal antenna and a second terminal antenna. In various embodiments, a first terminal antenna is a first multi-band array configured for receiving and scanning with at least a first plurality of receive antenna elements operating at a first frequency or first frequency band and a second plurality of receive elements operating at a second frequency of second frequency band. A second terminal antenna is a second multi-band array configured for transmitting with at least a first plurality of transmit antenna elements operating at a first frequency or first frequency band and a second plurality of transmit antenna elements operating at a second frequency of second frequency band. In the first antenna configured for receiving and scanning, the plurality of first receive antenna elements and the plurality of second receive antenna elements are interlaced. In the second antenna configured for transmitting, the plurality of first transmit antenna elements and the plurality of second transmit antenna elements are interlaced. In transmitting, at a single time, the second antenna is configured to transmit either with the first plurality of transmit antenna elements or the second plurality of transmit antenna elements, which eliminates or reduces interference on transmitting. In various embodiments, each of the first terminal antenna and the second terminal antenna may be flat panel antennas. Each of the first terminal antenna and the second terminal antenna may provide for phased arrays with steerable beams. A first steerable beam of each terminal antenna may be at a first frequency band, and a second steerable beam may be at a second frequency band.

### Exemplary Systems, Apparatuses, and Methods

Embodiments of the present disclosure herein include methods, apparatuses, and systems for antennas, particularly for antennas configured for multi-satellite, multi-constellation communications.

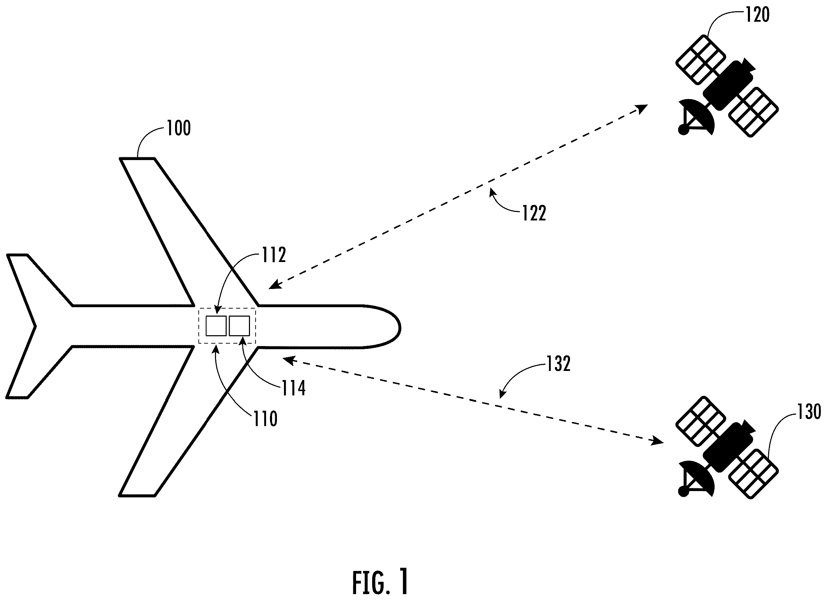

FIG. 1 illustrates an exemplary system for multi-constellation satellite communication in accordance with one or more embodiments of the present disclosure.

A vehicle 100 includes or may have mounted on it an antenna array 110, for example such as a terminal antenna array. The antenna array 110 includes a first antenna 112 and a second antenna 114. The first antenna 112 may be a receive antenna, and the second antenna 114 may be a transmit antenna. The antenna array 110, using the first antenna 112 and the second antenna 114, may be configured to communicate with both a first satellite 120 and a second satellite 130. For example, the antenna array 110 may communicate, using the first antenna 112 and the second antenna 114, with the first satellite 120 and the second satellite 130 simultaneously, contemporaneously, and/or the like. In various embodiments, the antenna array 110 communications with the first satellite 120 and the second satellite 130 may at least partially overlap in time. For example, the first antenna 112 may receive communications from a first satellite 120 and scan at the same time for a second satellite 130. During transmitting, the second antenna 114 will transmit at a single transmit frequency or frequency band at a time.

The first satellite 120 may be part of a first constellation of satellites. In the example of FIG. 1, the illustration of the first satellite 120 is also representative of the first constellation of satellites. The first satellite 120, and the first constellation of satellites, may operate in a first frequency band.

The second satellite 130 may be part of a second constellation of satellites. In the example of FIG. 1, the illustration of the second satellite 130 is also representative of the second constellation of satellites. The second satellite 130, and the second constellation of satellites, may operate in a second frequency band that is different from the first frequency band.

In various embodiments, the first frequency band may be a Ku frequency band. The antenna array 110, via the first antenna 112, may receive communication receptions (e.g., data) from the first satellite 120 in a receive frequency band of the first frequency band. The antenna array 110, via the second antenna 114, may transmit communication transmissions (e.g., data) to the first satellite 120 in a transmit frequency band of the first frequency band. In various embodiments, the receive frequency band of the first frequency band may be a receive Ku frequency band with a range of 10.7 GHz to 12.7 GHz. In various embodiments, the transmit frequency band of the first frequency band may a transmit Ku frequency band be with a range of 14.0 GHz to 14.5 GHz.

In various embodiments, the second frequency band may be a Ka frequency band. The antenna array 110, via the first antenna 112, may receive communication receptions (e.g., data) from the second satellite 130 in a receive frequency band of the second frequency band. The antenna array 110, via the second antenna 114, may transmit communication transmissions (e.g., data) to the second satellite 130 in a transmit frequency band of the second frequency band. In various embodiments, the receive frequency band of the second frequency band may be a receive Ka frequency band with a range of 17.7 GHz to 21.2 GHz. In various embodiments, the transmit frequency band of the second frequency band may be a transmit Ka frequency band with a range of 27.5 GHz to 31.0 GHz.

In various embodiments, the antenna array 110 may be mounted to the exterior or interior of the vehicle 100. Examples of a vehicle 100 include, but are not limited to, an aircraft, an unmanned aerial vehicle (e.g., drone, quadcopter, etc.), a ship, an automobile, etc. For example, an aircraft may have an antenna array 110 mounted to its exterior.

In various embodiments, using the antenna array 110 with the first antenna 112 and the second antenna 114 allows for satellite connectivity to multiple satellites and, more particularly, multiple satellite constellations. For example, using the antenna array 110 with the first antenna 112 and the second antenna 114 may allow for connectivity to multiple satellites, wherein two or more of the multiple satellites belong to different satellite constellations.

A satellite constellation may include satellites in one of a GEO, LEO, MEO, or HEO. Each constellation may include multiple satellites that operate in one frequency band. The different satellites of different constellations may operate in different frequency bands. Various embodiments allow for using a single antenna array 110 or antenna terminal to communicate with multiple satellite constellations. For example, the first antenna 112 may receive communications from a first satellite 120 and scan at the same time for a second satellite 130. During transmitting, the second antenna 114 will transmit at a single transmit frequency or frequency band at a time The communication with multiple satellites may have the antenna array 110 transmitting with one satellite at a time, which eliminates or reduces interference for transmissions from the antenna array 100.

These and other embodiments provide for multiple advantages. A first advantage includes a reduction in real estate of physical space needed for the antenna array 110 compared to conventional antenna arrays, where a conventional antenna array may only receive or transmit with a single constellation of satellites at one frequency band. Another advantage is that various embodiments provide flexibility to use different networks or constellations, which provides resilience for outages in any one or more of the networks and/or constellations.

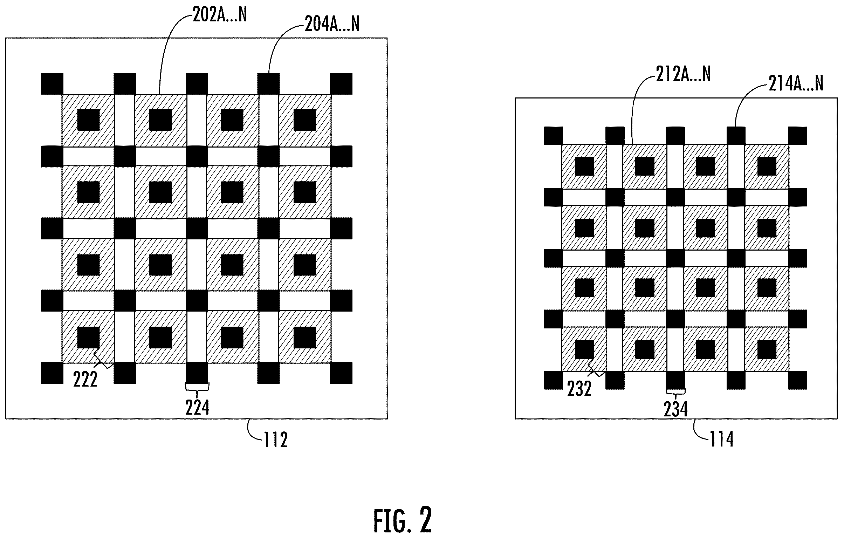

The first antenna 112 and the second antenna 114 include interlaced antenna elements. This interlacing is an example of how the footprint of or space required for the antenna array 110 may be reduced. As illustrated and described herein (e.g., with respect to FIG. 2), interlacing of antenna elements may include positioning a first plurality of antenna elements such that they at least partially overlap with a second plurality of antenna elements. In various embodiments, at least some of the first plurality of antenna elements may fully overlap with at least some of the second plurality of antenna elements. In various embodiments, at least some of the first plurality of antenna elements may partially overlap with at least some of the second plurality of antenna elements.

FIG. 2 illustrates exemplary antennas in accordance with one or more embodiments of the present disclosure. The first antenna 112 is a receive (Rx) antenna. The second antenna 114 is a transmit (Tx) antenna.

The first antenna 112 includes a first plurality of receive antenna elements 202A-N and a second plurality of receive antenna elements 204A-N. The first plurality of receive antenna elements 202A-N are configured to receive at a first frequency band. The second plurality of receive antenna elements 204A-N are configured to receive at a second frequency band.

The second antenna 114 includes a first plurality of transmit antenna elements 212AN and a second plurality of transmit antenna elements 214A-N. The first plurality of transmit antenna elements 212A-N are configured to transmit at a first frequency band. The second plurality of transmit antenna elements 214A-N are configured to transmit at a second frequency band.

A receive element 202 of the first plurality of receive antenna elements 202A-N is illustrated as a black box. Respective receive elements 202 may be spaced from other receive elements 202 by a distance 222. The distance 222 may define the spacing between each outer corner of a respective receive element 202 and the nearest outer corner of any other neighboring receive element 202. A receive element 204 of the second plurality of receive antenna elements 204A-N is illustrated as a patterned box. Respective receive elements 204 may be spaced from other receive elements 204 by a distance 224. The distance 224 may define the spacing between each side edge of a respective receive element 204 and the nearest side edge of any other neighboring receive element 204. As illustrated, the second plurality of receive antenna elements 204A-N are interlaced among the first plurality of receive antenna elements 202A-N. For example, the second plurality of receive antenna elements 204A-N may be positioned such that they at least partially overlap with first plurality of receive antenna elements 202A-N. In some examples, at least some of the second plurality of receive antenna elements 204A-N may fully overlap with at least some of the first plurality of receive antenna elements 202A-N. In other examples, at least some of the second plurality of receive antenna elements 204A-N may partially overlap with at least some of the first plurality of receive antenna elements 202A-N.

A transmit element 212 of the first plurality of transmit antenna elements 212A-N is illustrated as a black box. Respective transmit elements 212 may be spaced from other transmit elements 212 by a distance 232. The distance 232 may define the spacing between each outer corner of a respective transmit element 212 and the nearest outer corner of any other neighboring transmit element 212. A transmit element 214 of the second plurality of transmit antenna elements 214A-N is illustrated as a patterned box. Respective transmit elements 214 may be spaced from other transmit elements 214 by a distance 234. The distance 234 may define the spacing between each side edge of a respective transmit element 214 and the nearest side edge of any other neighboring transmit element 214. As illustrated, the second plurality of transmit antenna elements 214A-N are interlaced among the first plurality of transmit antenna elements 212A-N. For example, the second plurality of transmit antenna elements 214A-N may be positioned such that they at least partially overlap with first plurality of transmit antenna elements 212A-N. In some examples, at least some of the second plurality of transmit antenna elements 214A-N may fully overlap with at least some of the first plurality of transmit antenna elements 212A-N. In other examples, at least some of the second plurality of transmit antenna elements 214A-N may partially overlap with at least some of the first plurality of transmit antenna elements 212A-N.

In various embodiments, the first antenna 112 may include a Ku receive antenna and a Ka receive antenna in one panel. In various embodiments, the second antenna 114 may include a Ku transmit antenna and a Ka transmit antenna in one panel. In various embodiments, each of these antennas may provide for a wide angle steering of approximately +/- 70%.

Embodiments may not have issues with transmit/receive (Tx/Rx) isolation, as the receive elements and the transmit elements are separated into separate antennas. For example, the Ka receive antenna may receive communications with and/or scan for satellites while the Ku transmit antenna may communicate with a satellite . The antenna array 110 receives over both bands simultaneously and may switch to transmission, where the antenna array 110 transmits at one transmit frequency or transmit frequency band at a time. Various embodiments are dual switchable polarization.

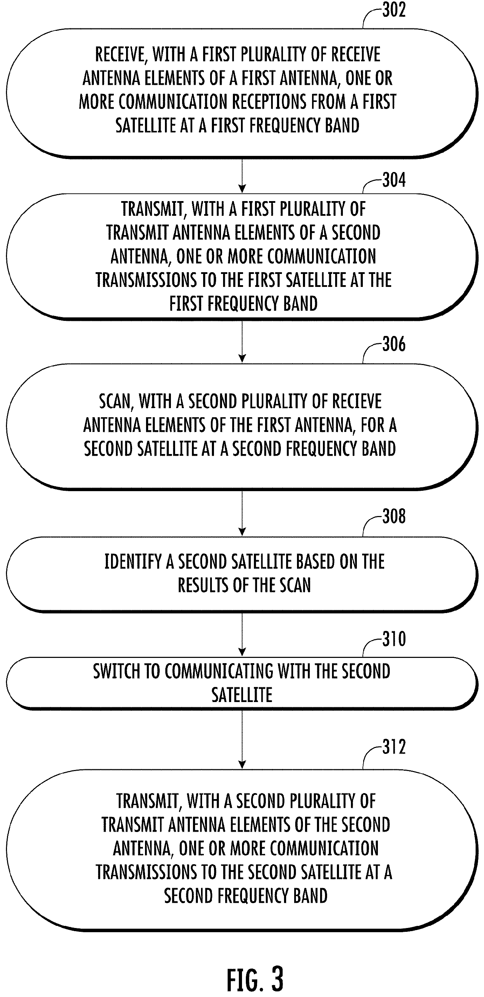

FIG. 3 illustrates a flowchart of operations in accordance with one or more embodiments of the present disclosure. An antenna array 110 may comprise a first antenna (e.g., the first antenna 112) and a second antenna (e.g., the second antenna 114).

The first antenna 112 may be a receive antenna with a first plurality of receive antenna elements 202A-N and a second plurality of receive antenna elements 204A-N. The first plurality of receive antenna elements 202A-N may be configured to receive at a first frequency band (e.g., of a Ku band). The second plurality of receive antenna elements 204A-N may be configured to receive at a second frequency band (e.g., a Ka band).

The second antenna 114 may be a transmit antenna with a first plurality of transmit antenna elements 212A-N and a second plurality of transmit antenna elements 214A-N. The first plurality of transmit antenna elements 212A-N may be configured to transmit at the first frequency. The second plurality of transmit antenna elements 214A-N may be configured to transmit at the second frequency.

At operation 302, the antenna array receives, with a first plurality of receive antenna elements of the first antenna, one or more communication receptions from a first satellite and at the first frequency band.

At operation 304, the antenna array transmits, with a first plurality of transmit antenna elements of the second antenna, one or more communication transmissions to the first satellite and at the first frequency band.

At operation 306, the antenna array scans, with the second plurality of receive antenna elements of the first antenna, for a second satellite and at the second frequency band.

At operation 308, the antenna array identifies a second satellite based on the results of the scan.

At operation 310, the antenna array switches to communicating with the second satellite.

At operation 312, the antenna array transmits, with the second plurality of transmit antenna elements of the second antenna, one or more communication transmissions to the second satellite and at the second frequency band.

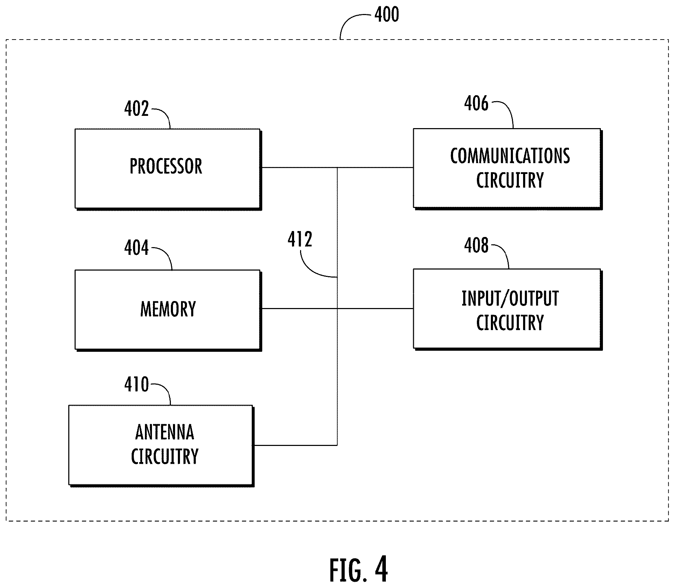

FIG. 4 illustrates an exemplary device in accordance with one or more embodiments of the present disclosure. Exemplary embodiments of the device 400 may include, but are not limited to, an antenna array 110 with the first antenna 112 and second antenna 114. The device 400 may include a packaging or mounting fixture that the first antenna 112 and the second antenna 114 are arranged in or on.

The device 400 illustrated includes a processor 402, memory 404, communications circuitry 406, input/output circuitry 408, and antenna circuitry 410. A bus 412 may connect the processor 402, the memory 404, the communications circuitry 406, the input/output circuitry 408, and/or the antenna circuitry 410.

The processor 402, although illustrated as a single block, may be comprised of a plurality of components and/or processor circuitry. The processor 402 may be implemented as, for example, various components comprising one or a plurality of microprocessors with accompanying digital signal processors; one or a plurality of processors without accompanying digital signal processors; one or a plurality of coprocessors; one or a plurality of multi-core processors; processing circuits; and various other processing elements. The processor may include integrated circuits, such as ASICs, FPGAs, systems-on-a-chip (SoC), or combinations thereof. In various embodiments, the processor 402 may be configured to execute applications, instructions, and/or programs stored in the processor 402, memory 404, or otherwise accessible to the processor 402. When executed by the processor 402, these applications, instructions, and/or programs may enable the execution of one or a plurality of the operations and/or functions described herein. Regardless of whether it is configured by hardware, firmware/software methods, or a combination thereof, the processor 402 may comprise entities capable of executing operations and/or functions according to the embodiments of the present disclosure when correspondingly configured.

The memory 404 may comprise, for example, a volatile memory, a non-volatile memory, or a certain combination thereof. Although illustrated as a single block, the memory 404 may comprise a plurality of memory components. In various embodiments, the memory 404 may comprise, for example, a random access memory, a cache memory, a flash memory, a hard disk, a circuit configured to store information, or a combination thereof. The memory 404 may be configured to write or store data, information, application programs, instructions, etc. so that the processor 402 may execute various operations and/or functions according to the embodiments of the present disclosure. For example, in at least some embodiments, a memory 404 may be configured to buffer or cache data for processing by the processor 402. Additionally or alternatively, in at least some embodiments, the memory 404 may be configured to store program instructions for execution by the processor 402. The memory 404 may store information in the form of static and/or dynamic information. When the operations and/or functions are executed, the stored information may be stored and/or used by the processor 402.

The communication circuitry 406 may be implemented as a circuit, hardware, computer program product, or a combination thereof, which is configured to receive and/or transmit data from/to another component or apparatus. The computer program product may comprise computer-readable program instructions stored on a computer-readable medium (e.g., memory 404) and executed by a processor 402. In various embodiments, the communication circuitry 406 (as with other components discussed herein) may be at least partially implemented as part of the processor 402 or otherwise controlled by the processor 402. The communication circuitry 406 may communicate with the processor 402, for example, through a bus 1012. Such a bus 1012 may connect to the processor 402, and it may also connect to one or more other components of the processor 402. The communication circuitry 406 may be comprised of, for example, transmitters, receivers, transceivers, network interface cards and/or supporting hardware and/or firmware/software, and may be used for establishing communication with another component(s), apparatus(es), and/or system(s). The communication circuitry 406 may be configured to receive and/or transmit data that may be stored by, for example, the memory 404 by using one or more protocols that can be used for communication between components, apparatuses, and/or systems.

The input/output circuitry 408 may communicate with the processor 402 to receive instructions input by an operator and/or to provide audible, visual, mechanical, or other outputs to an operator. The input/output circuitry 408 may comprise supporting devices, such as a keyboard, a mouse, a user interface, a display, a touch screen display, lights (e.g., warning lights), indicators, speakers, and/or other input/output mechanisms. The input/output circuity 408 may comprise one or more interfaces to which supporting devices may be connected.

The antenna circuitry 410 may communicate with the processor 402 or memory 404 to receive and transmit data to one or more satellites. In various embodiments, the antenna array 110 may be mounted externally to the device and the communications circuitry 406 and/or the input/output circuitry 408 may provide communication between the processor 402 and memory 404 and the antenna array 110.

It should be readily appreciated that the embodiments described herein may be configured in various additional and alternative manners in addition to those expressly described herein.

### Conclusion

Operations and/or functions of the present disclosure have been described herein, such as in flowcharts. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

While this detailed description has set forth some embodiments of the present invention, the appended claims cover other embodiments of the present invention which differ from the described embodiments according to various modifications and improvements.

Within the appended claims, unless the specific term "means for" or "step for" is used within a given claim, it is not intended that the claim be interpreted under 35 U.S.C. § 112, paragraph 6.

## Claims

1. A system comprising:
an antenna array comprising a first antenna and a second antenna;
wherein the first antenna is a receive antenna with a first plurality of receive antenna elements configured to receive at a first frequency band and a second plurality of receive antenna elements configured to receive at a second frequency band;
wherein the second antenna is a transmit antenna with a first plurality of transmit antenna elements configured to transmit at the first frequency band and a second plurality of transmit antenna elements configured to transmit at the second frequency band;
at least one processor and at least one memory comprising instructions that, when executed by the at least one processor, cause the antenna array to:
receive, with the first plurality of receive antenna elements of the first antenna, one or more communication receptions from a first satellite at the first frequency band;
transmit, with the first plurality of transmit antenna elements of the second antenna, one or more communication transmissions to the first satellite at the first frequency band;
scan, with the second plurality of receive antenna elements of the first antenna, for a second satellite at second frequency band; and
transmit, with the second plurality of transmit antenna elements of the second antenna, one or more communication transmissions to the second satellite at the second frequency band.

2. The system of claim 1, wherein the first frequency band is a Ku frequency band.

3. The system of claim 2, wherein the Ku frequency band is comprised of a receive Ku frequency band from 10.7 GHz to 12.7 GHz and a transmit Ku frequency band from 14.0 GHz to 14.5 GHz;
wherein the one or more communication receptions from the first satellite are in the receive Ku band; and
wherein the one or more communication transmissions to the first satellite are in the transmit Ku band.

4. The system of claim 1, wherein the second frequency band is a Ka frequency band.

5. The system of claim 4, wherein the Ka frequency band is comprised of a receive Ka frequency band from 17.7 GHz to 21.2 GHz and a transmit Ka frequency band from 27.5 GHz to 31.0 GHz;
wherein the scan for the second satellite is in the receive Ka frequency band; and
wherein the one or more communication transmissions to the second satellite are in the transmit Ka band.

6. The system of claim 1, wherein the first satellite is part of a low Earth orbit constellation and wherein the second satellite is part of a geosynchronous equatorial orbit constellation.

7. A method comprising:
providing an antenna array comprising a first antenna and a second antenna, wherein the first antenna is a receive antenna with a first plurality of receive antenna elements configured to receive at a first frequency band and a second plurality of receive antenna elements configured to receive at a second frequency band, and wherein the second antenna is a transmit antenna with a first plurality of transmit antenna elements configured to transmit at the first frequency band and a second plurality of transmit antenna elements configured to transmit at the second frequency band;
receiving, with the first plurality of receive antenna elements of the first antenna, one or more communication receptions from a first satellite at the first frequency band;
transmitting, with the first plurality of transmit antenna elements of the second antenna, one or more communication transmissions to the first satellite at the first frequency band;
scanning, with the second plurality of receive antenna elements of the first antenna, for a second satellite at second frequency band; and
transmitting, with the second plurality of transmit antenna elements of the second antenna, one or more communication transmissions to the second satellite at the second frequency band.

8. The method of claim 7, wherein the first frequency band is a Ku frequency band.

9. The method of claim 8, wherein the Ku frequency band is comprised of a receive Ku frequency band from 10.7 GHz to 12.7 GHz and a transmit Ku frequency band from 14.0 GHz to 14.5 GHz;
wherein the one or more communication receptions from the first satellite are in the receive Ku band; and
wherein the one or more communication transmissions to the first satellite are in the transmit Ku band.

10. The method of claim 7, wherein the second frequency band is a Ka frequency band.

11. The method of claim 9, wherein the Ka frequency band is comprised of a receive Ka frequency band from 17.7 GHz to 21.2 GHz and a transmit Ka frequency band from 27.5 GHz to 31.0 GHz;
wherein scanning for the second satellite is in the receive Ka frequency band; and
wherein the one or more communication transmissions to the second satellite are in the transmit Ka band.

12. The method of claim 7, wherein the first satellite is part of a low Earth orbit constellation and wherein the second satellite is part of a geosynchronous equatorial orbit constellation.

13. A computer program product comprising at least one non-transitory computer-readable storage medium having computer program code stored thereon that, in execution with at least one processor, configures the computer program product to:
receive, with a first plurality of receive antenna elements of a first antenna, one or more communication receptions from a first satellite at a first frequency band, wherein:
an antenna array comprises the first antenna and a second antenna;
the first antenna is a receive antenna with the first plurality of receive antenna elements configured to receive at a first frequency band and a second plurality of receive antenna elements configured to receive at a second frequency band; and
the second antenna is a transmit antenna with a first plurality of transmit antenna elements configured to transmit at the first frequency band and a second plurality of transmit antenna elements configured to transmit at the second frequency band;
transmit, with the first plurality of transmit antenna elements of the second antenna, one or more communication transmissions to the first satellite at the first frequency band; and
scan, with the second plurality of receive antenna elements of the first antenna, for a second satellite at second frequency band; and
transmit, with the second plurality of transmit antenna elements of the second antenna, one or more communication transmissions to the second satellite at the second frequency band.

14. The computer program product of claim 13, wherein the first frequency band is a Ku frequency band.

15. The computer program product of claim 14, wherein the Ku frequency band is comprised of a receive Ku frequency band from 10.7 GHz to 12.7 GHz and a transmit Ku frequency band from 14.0 GHz to 14.5 GHz;
wherein the one or more communication receptions from the first satellite are in the receive Ku band; and
wherein the one or more communication transmissions to the first satellite are in the transmit Ku band.
